# EUROPEAN PATENT SPECIFICATION

(11) **EP 3 279 794 B1**
(45) Date of publication and mention of the grant of the patent: **26.01.2022**
(21) Application number: 16771251.2
(22) Date of filing: 15.03.2016
(51) Int. Cl.: G06F 11/14, G06F 16/27, G06F 11/18

(54) **TIME-BASED NODE ELECTION METHOD AND APPARATUS**
ZEITBASIERTES KNOTENAUSWAHLVERFAHREN UND VORRICHTUNG
PROCÉDÉ ET APPAREIL D'ÉLECTION DE NOEUDS AXÉE SUR LE TEMPS

(30) Priority: 02.04.2015 CN 201510155909
(43) Date of publication of application: 07.02.2018
(73) Proprietor: Beijing OceanBase Technology Co., Ltd., Beijing 1000020 (CN)
(72) Inventor: YANG, Zhenkun, Hangzhou 310099 (CN); XIAO, Jinliang, Hangzhou 310099 (CN)
(74) Representative: Fish & Richardson P.C.
(86) International application number: PCT/CN2016/076414
(87) International publication number: WO 2016/155496

(56) References cited:
- CN-A- 102 682 572
- US-A1- 2005 283 644
- US-A1- 2008 071 853
- US-A1- 2009 274 050
- US-B1- 7 139 790
- CSZHOUWEI: 'The Raft Consensus Algorithm', [Online] 04 August 2014, pages 1 - 6, XP055491159 Retrieved from the Internet: <URL:blog.csdn.net/cszhouwei/article/detail s/38374603>

## Description

### Technical Field

The present application relates to the field of computer technologies, and in particular, to a time-based node election method and apparatus.

### Background Art

With the development of information technologies, the Internet can provide diversified massive information for users. For network service providers, conventional processing devices such as a single server or database can no longer meet the requirement for processing massive data. Therefore, a distributed system comes into being.

Generally, multiple processing devices (such as servers, processors, or databases) included in the distributed system may globally perform multiple types of management operations, such as scheduling, distributed processing, cooperative processing, and remote control, on various data resources in the system. Each processing device in the distributed system may be regarded as a distributed node (referred to as a node for short). In this way, the distributed system can "distribute" massive data to each node in the system, so that each node processes corresponding data, thus effectively improving data processing efficiency and significantly increasing data throughput.

In the distributed system, in order to further improve efficiency of scheduling data resources in different nodes, it is necessary to uniformly store some information of special types in a same node, for example, meta-information (the meta-information is descriptive information for data resources) including a storage location of data, an update state, a search keyword, and other information.

In the prior art, a suitable node (which may also be referred to as a leader node) is selected by means of node election, to maintain and manage meta-information. A node is specifically elected in the following manner: different nodes may send voting requests to other nodes, each node votes after receiving a voting request, and finally a leader node is elected according to the number of votes counted.

However, when the foregoing node election manner is employed, different nodes each have a large amount of data to be processed, and after a node is in an idle state and sends voting requests to other nodes, the other nodes may be processing data and may not immediately enter a voting state even if they receive the voting request sent by the node. That is, timing of each node for voting and counting is uncertain, and node election cannot be performed timely and effectively.

Patent publication US 2008/071853 A1 to Mosier et al. for "Distributed-leader-election service for a distributed computer system," published 20 March 2008, discloses methods and systems for leadership allocation in a distributed computer system. A leader-election service process runs within each node of a distributed system, together cooperatively providing a distributed-leader-election service, which employs a distributed consensus service to manage distributed state information related to roles and leadership allocation within the system. Client processes within each node interface with the leader-election service process of the node in order to assume leadership of particular roles within the distributed system. Leadership-allocation management is centralized within each node.

Patent publication US 2005/283644 A1 to Lorch et al. for "Efficient changing of replica sets in distributed fault-tolerant computing system," published 22 December 2005, discloses how a distributed computing system can be operated in a fault tolerant manner using a set of computing devices. The set of computing devices can tolerate a number of failures by implementing identical replicas of a state machine and selecting proposals using a Paxos algorithm. The set of devices participating in the distributed system can be modified by adding or removing devices from the set. A first set of devices is responsible for determining a sequence of steps to be performed by the replicated state machine. A second set of devices can be defined, removing the responsibility from the first set and assuming the responsibility for determining steps in the sequence of steps to be performed by the state machine. The range of steps for which the first set is responsible is mutually exclusive with the range of steps for which the second set is responsible.

Patent publication US 7 139 790 B1 to Wang et al. for "Weak leader election," published 21 November 2006, discloses a weak leader election approach to determining which of a number of redundant nodes is the leader node. The nodes exchange information particular to them, such as age information. Based on the information received from the other nodes, each node determines whether it is the leader. Each redundant node knows only whether it is the leader node. Redundant nodes that are not the leader do not know which node is the leader node.

### Summary of the Invention

The present invention provides a time-based node election method and apparatus, for solving the problem of low efficiency in current node election. The invention is defined in the claims.

An example time-based node election method, where the method is used for determining a leader node in a distributed system, includes:
configuring, by a host, a same voting time, a same vote counting time, and a same leader node tenure for all nodes; and
sending time configuration information that carries the configured voting time, vote counting time, and leader node tenure to all the nodes, so that the nodes vote in the voting time, count the number of votes in the vote counting time, and elect a leader node according to a vote counting result, and the nodes are enabled to perform periodic node election according to the leader node tenure.

A second example time-based node election method, where the method is used for determining a leader node in a distributed system, includes:
when there is no leader node among all nodes, sending, by at least one node as a campaign node, a voting request to all the nodes in a voting time that is carried in time configuration information;
receiving, by each campaign node, vote information that is generated by other nodes according to the voting request;
counting, by each campaign node in a vote counting time that is carried in the time configuration information, the amount of vote information received; and
determining, by the campaign nodes, a leader node according to the counted respective amount of vote information, to process a specified service.

A third example time-based node election method, where the method is used for determining a leader node in a distributed system, includes:
when there is no leader node among all nodes, receiving, by at least two nodes as voting nodes in a voting time that is carried in time configuration information, a voting request sent by a campaign node; and
generating, by the voting nodes according to the voting request, vote information and sending the vote information to the campaign node in the voting time, so that the campaign node counts the amount of the vote information in a vote counting time, to determine a leader node.

The present application further provides a time-based node election method, where the method is used for determining a leader node in a distributed system, and the method includes:
when there is a leader node among all nodes and the leader node determines that the leader node itself meets a preset criterion, sending, by the leader node, a reappointment request to all the nodes in a voting time according to a leader node tenure in time configuration information;
receiving, by the leader node, vote information generated by other nodes according to the reappointment request;
counting, by the leader node in a vote counting time, the amount of the received vote information; and
determining, by the leader node, a reappointment state according to the counted amount of the vote information, and processing a specified service after reappointment succeeds;
wherein the preset criterion comprises at least one of a load processing criterion and a data updating degree.

A fourth example time-based node election method, where the method is used for determining a leader node in a distributed system, includes:
when there is a leader node among all nodes and the leader node determines that the leader node itself does not meet a preset criterion, screening out, by the leader node according to a leader node tenure in time configuration information, a node that meets the preset criterion among other nodes to serve as a successor node; and
sending, by the leader node, a voting request for the successor node to other nodes in the voting period, so that the successor node receives vote information sent by other nodes, counts the amount of the vote information in a vote counting time, and is determined as a new leader node.

A fifth example time-based node election method, where the method is used for determining a leader node in a distributed system, includes:
when there is a leader node among all nodes, receiving, by at least two nodes as voting nodes in a voting time carried in time configuration information, a reappointment request sent by the leader node; and
generating, by the voting nodes according to the reappointment request, vote information and sending the vote information to the leader node in the voting time carried in the time configuration information, so that the leader node counts the amount of the vote information in a vote counting time, to determine a reappointment state;
wherein the voting node does not process the voting request received in a tenure of the leader node.

A sixth example time-based node election method, where the method is used for determining a leader node in a distributed system, includes:
when there is a leader node among all nodes, receiving, by at least two nodes as voting nodes in a voting time carried in time configuration information, a voting request for a successor node sent by the leader node; and
generating, by the voting nodes according to the voting request, vote information and sending the vote information to the successor node in the voting time carried in the time configuration information, so that the successor node counts the amount of the vote information in a vote counting time, to determine a new leader node.

An example time-based node election apparatus, where the apparatus is configured to determine a leader node in a distributed system, includes:
a configuration module configured to configure a same voting time, a same vote counting time, and a same leader node tenure for all nodes; and
a sending module configured to send time configuration information that carries the configured voting time, vote counting time, and leader node tenure to all the nodes, so that the nodes vote in the voting time, count the number of votes in the vote counting time, and elect a leader node according to a vote counting result, and the nodes are enabled to perform periodic node election according to the leader node tenure.

A second example time-based node election apparatus, where the apparatus is configured to determine a leader node in a distributed system and is disposed in a campaign node, and when there is no leader node among all nodes, includes:
a voting request module configured to send a voting request to all the nodes in a voting time that is carried in time configuration information;
a receiving module configured to receive vote information that is generated by other nodes according to the voting request;
a counting module configured to count, in a vote counting time that is carried in the time configuration information, the amount of vote information received; and
a determination module configured to determine a leader node according to the counted respective amount of vote information, to process a specified service.

A third example time-based node election apparatus, where the apparatus is configured to determine a leader node in a distributed system and is disposed in a voting node, and when there is no leader node among all nodes, includes:
a receiving module configured to receive, in a voting time that is carried in time configuration information, a voting request sent by a campaign node; and
a vote information module configured to generate, according to the voting request, vote information and send the vote information to the campaign node in the voting time, so that the campaign node counts the amount of the vote information in a vote counting time, to determine a leader node.

A fourth example time-based node election apparatus, where the apparatus is configured to determine a leader node in a distributed system and is disposed in a leader node; when there is a leader node among all nodes and the leader node determines that the leader node itself meets a preset criterion, includes:
a reappointment request module configured to send a reappointment request to all the nodes in a voting time according to a leader node tenure in time configuration information;
a receiving module configured to receive vote information generated by other nodes according to the reappointment request;
a counting module configured to count, in a vote counting time, the amount of the received vote information; and
a determination module configured to determine a reappointment state according to the counted amount of the vote information, and process a specified service after reappointment succeeds;
wherein the preset criterion includes at least one of a load processing criterion and a data updating degree.

A fifth example time-based node election apparatus, where the apparatus is configured to determine a leader node in a distributed system and is disposed in a leader node; when there is a leader node among all nodes and the leader node determines that the leader node itself does not meet a preset criterion, includes:
a screening module configured to screen out, according to a leader node tenure in time configuration information, a node that meets the preset criterion among other nodes to serve as a successor node; and
a voting request module configured to send a voting request for the successor node to other nodes in the voting period, so that the successor node receives vote information sent by other nodes, counts the amount of the vote information in a vote counting time, and is determined as a new leader node.

A sixth example time-based node election apparatus, where the apparatus is configured to determine a leader node in a distributed system and is disposed in a voting node, and when there is a leader node among all nodes, includes:
a receiving module configured to receive, in a voting time carried in time configuration information, a reappointment request sent by the leader node; and
a vote information module configured to generate, according to the reappointment request, vote information and send the vote information to the leader node in the voting time carried in the time configuration information, so that the leader node counts the amount of the vote information in a vote counting time, to determine a reappointment state;

A seventh example time-based node election apparatus, where the apparatus is configured to determine a leader node in a distributed system and is disposed in a voting node, and when there is a leader node among all nodes, includes:
a receiving module configured to receive, in a voting time carried in time configuration information, a voting request for a successor node sent by the leader node; and
a vote information module configured to generate, according to the voting request, vote information and send the vote information to the successor node in the voting time carried in the time configuration information, so that the successor node counts the amount of the vote information in a vote counting time, to determine a new leader node; and configured not to process the voting request received in a tenure of the leader node.

The embodiments of the present application provide a time-based node election method and apparatus. By means of the method, a host configures a same voting time and a same vote counting time for all nodes, and sends time configuration information that carries the configured voting time and vote counting time to all the nodes, so that the nodes vote in the voting time; count the number of votes in the vote counting time, and elect a leader node according to a vote counting result. Campaign nodes synchronously perform the voting operation and the vote counting operation according to the same voting time and the same vote counting time that are configured by the host, thus overcoming the defect in the prior art that the timing of each node for voting and vote counting is uncertain, so that the efficiency of determining a leader node in a node election process is significantly improved.

The invention is specified by the independent claims. Further preferred embodiments are defined by the dependent claims.

### Brief Description of the Drawings

The accompanying drawings described here are used for providing further understanding of the present application, and constitute a part of the present application. The exemplary embodiments of the present application and the description thereof are used for illustrating the present application. the drawings:
FIG. 1, FIG. 2, and FIG. 5 to FIG. 9 show a time-based node election process according to embodiments of the present application;
FIG. 3a to FIG 3d are schematic diagrams of a voting time and a vote counting time according to embodiments of the present application;
FIG. 4 is a schematic diagram of sending, by nodes, vote information for node election in a specific application instance according to an embodiment of the present application; and
FIG. 10 to FIG. 16 are schematic structural diagrams of a time-based node election apparatus according to embodiments of the present application.

### Detailed Description

To make the objectives, technical solutions, and advantages of the present application clearer, the technical solutions of the present application will be described clearly and completely below with reference to the specific embodiments of the present application and corresponding accompanying drawings. Apparently, the described embodiments are merely some, rather than all, of the embodiments of the present application. Based on the embodiments in the present application, all other embodiments obtained by those of ordinary skill in the art without creative efforts fall within the protection scope of the present application.

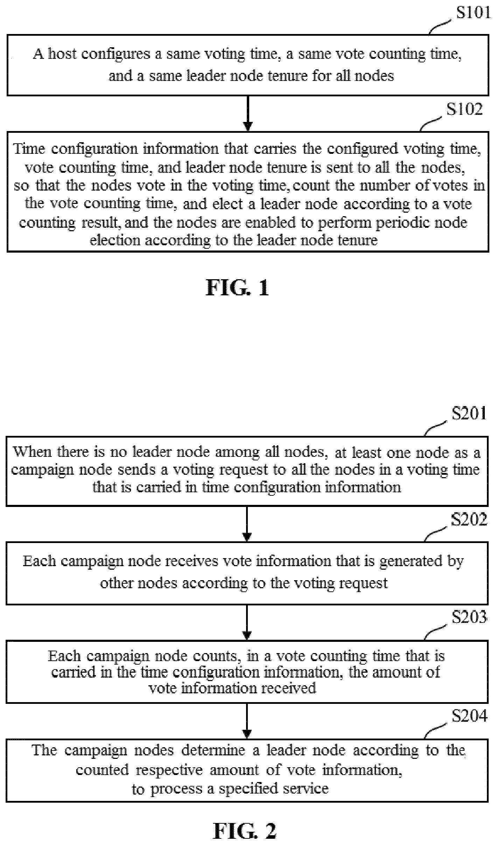

FIG. 1 shows a time-based node election method according to an embodiment of the present application. The method is used for determining a leader node in a distributed system, and the method specifically includes the following steps:
S101. A host configures a same voting time, a same vote counting time, and a same leader node tenure for all nodes.

In the embodiment of the present application, a host is disposed in a distributed system, and is configured to manage nodes in the distributed system, for example, schedule data, configure data, send a specific instruction, and so on. The host includes, but is not limited to: a network device with a monitoring function, such as a computer or a server.

In the prior art, when nodes in a distributed system perform node election, different nodes send voting requests at different times, and respective timing for responding to the voting request is also uncertain. Therefore, in the embodiment of the present invention, the host in the distributed system performs time configuration on the nodes in the distributed system, so that the nodes perform the same type of processing operation at the same time. That is, in step S101, the host configures the same voting time and the same vote counting time for different nodes.

The voting time and the vote counting time in the embodiment of the present application are each a time interval (rather than a time point at a particular moment). The length (duration) of the time intervals of the voting time and the vote counting time includes, but is not limited to: duration formed by different time units such as millisecond (ms), second (s), minute (min), hour (h), day (D), week, and month (mon).

In addition, the host further configures a leader node tenure for all the nodes, and after any node is elected as a leader node and the configured tenure elapses, the next node election process is started.

S102. Time configuration information that carries the configured voting time, vote counting time, and leader node tenure is sent to all the nodes, so that the nodes vote in the voting time, count the number of votes in the vote counting time, and elect a leader node according to a vote counting result, and the nodes are enabled to perform periodic node election according to the leader node tenure.

After configuring the voting time, the vote counting time, and the leader node tenure, the host needs to notify each node, so that each node performs corresponding operations according to the configured voting time, vote counting time, and leader node tenure. Therefore, the host may send time configuration information that carries the configured voting time, vote counting time, and leader node tenure to each node. In this way, after each node separately receives the time configuration information, each node may adjust a built-in clock thereof according to the received time configuration information, so that different nodes synchronously trigger the voting time and the vote counting time, to synchronously perform the corresponding operations.

Here, it should be further noted that, the voting time, the vote counting time, and the leader node tenure configured by the host are periodic. Reasons are as follows: after the nodes separately perform voting and vote counting operations according to the voting time and the vote counting time configured by the host and determine a leader node, the nodes and the leader node process a corresponding service; however, during an actual application, a huge volume of data to be processed in the distributed system may cause changes in the processing load and data updating degree of the leader node and other nodes, and this may result in situations such as overload, data updating lag, and crash of the leader node, thus seriously affecting efficiency of processing a specified service by the leader node. In such a case, if the voting time, the vote counting time, and the leader node tenure configured by the host are not periodic (that is, the nodes in the distributed system perform node election only once, and do not perform node election after the leader node fails), processing in the whole distributed system would be stopped. Node election cannot be performed again until the host re-configures a voting time and a vote counting time, and this also decreases the service processing efficiency of the distributed system.

Therefore, in the embodiment of the present application, the voting time, the vote counting time, and the leader node tenure configured by the host will repeat periodically. For example, an interval cycle of the voting time is 3000 ms, that is, after 3000 ms since the end of the first voting time, the second voting time arrives. For another example, the leader node tenure is 10 min, that is, after a node is elected as a leader node and serves as the leader node for 10 min, the next node election process begins. Certainly, during an actual application, the time cycle of the voting time and the vote counting time will be adjusted or set according to the need of the actual application, and the content here does not limit the present application.

By using the method of steps S101 to S102 above, the host configures the same time for the independent nodes in the distributed system, so that these nodes can perform the corresponding voting and vote counting operations in the same time, and nodes that are originally asynchronous in time can perform the same type of operation synchronously, thus effectively improving the efficiency of electing a leader node.

In the embodiment of the present application, after the host configures the same voting time, the same vote counting time, and the same leader node tenure, different nodes may perform the corresponding voting or vote counting operation according to the corresponding time configuration information. Specifically, with respect to nodes in a distributed system, an embodiment of the present application provides a time-based node election method. As shown in FIG. 2, the method includes the following steps:
S201. When there is no leader node among all nodes, at least one node as a campaign node sends a voting request to all the nodes in a voting time that is carried in time configuration information.

After a distributed system enters a state such as maintenance or update, there is no leader node among nodes in the distributed system. In this case, the nodes may elect a leader node. In an actual application scenario, node election can be performed when there are at least two nodes, and during node election, one node may send a voting request (where the voting request is sent to the node itself and another node). Therefore, in step S201 of the embodiment of the present application, there would be at least two nodes serving as campaign nodes for voting. Certainly, in an actual application scenario, when there are multiple nodes, each node may send, as a campaign node, a voting request to other nodes.

The difference from the prior art lies in that, in the embodiment of the present application, the campaign node will vote according to the voting time configured by the host, that is, the campaign node will configure a built-in clock signal thereof according to the time configuration information sent by the host, and when the built-in clock of the campaign node reaches the configured voting time, the campaign node will perform the operation of sending a voting request.

The voting request includes node information such as a node identifier and a node state of the campaign node, to reflect multiple node states such as a data processing capacity and a data updating degree of the campaign node, for other nodes to make a voting selection.

S202. Each campaign node receives vote information that is generated by other nodes according to the voting request.

After receiving the voting request sent by the campaign node, other nodes may generate, according to the voting request, corresponding vote information and send the vote information to the corresponding campaign node.

Certainly, in step S202, the process of receiving vote information by each campaign node is also in the voting time.

S203. Each campaign node counts, in a vote counting time that is carried in the time configuration information, the amount of vote information received.

In the embodiment of the present application, each campaign node will configure the built-in clock thereof according to the time configuration information received from the host, and when the clock in the campaign node reaches the configured vote counting time, the campaign node will perform a vote counting operation.

S204. The campaign nodes determine a leader node according to the counted respective amount of vote information, to process a specified service.

For step S204, the process of determining a leader node by the campaign nodes is completed before the end of the vote counting time. Moreover, after one campaign node is determined as a leader node, the leader node will send a notification message to other nodes, to inform other nodes that the leader node has been produced. The leader node will process a specified service, for example, maintain and manage metadata in the distributed system.

It should be noted that, in the embodiment of the present application, the finally determined leader node is unique. In this way, the specified service is processed by using one leader node, which can improve the retrieval, allocation, and processing efficiency of the specified service, and meanwhile, can also avoid a service conflict caused by the competition between multiple leader nodes for processing the specified service.

Through the steps above, the campaign nodes synchronously perform the voting operation and the vote counting operation according to the same voting time and the same vote counting time that are configured by the host, thus overcoming the defect in the prior art that the timing of each node for voting and vote counting is uncertain, so that the efficiency of determining a leader node in a node election process is significantly improved.

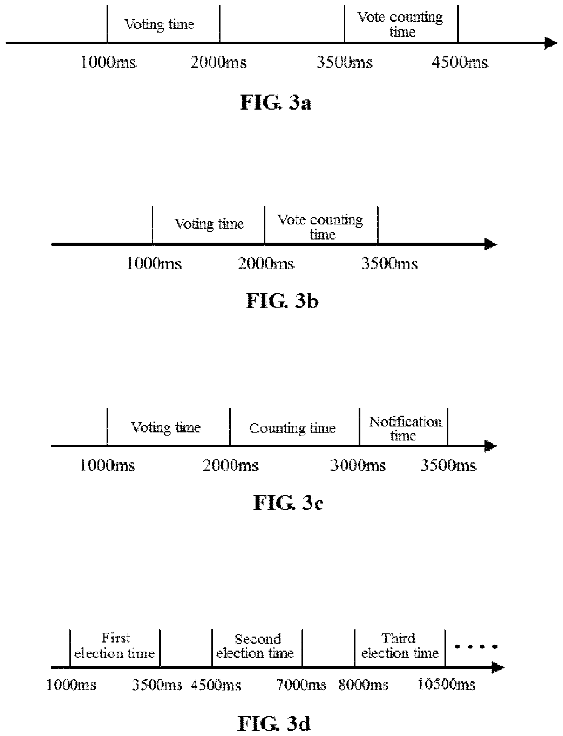

It should be noted that, in the embodiment of the present application, the voting time and the vote counting time configured by the host do not overlap with each other, so that the nodes in the distributed system perform the voting operation only in the voting time, and perform the vote counting operation only in the vote counting time. For example, in the situation shown in FIG. 3a, the campaign node configures the corresponding voting time and vote counting time for the built-in clock thereof according to the time configuration information. That is, in FIG. 3a, the time from 1000 ms to 2000 ms is the voting time, and the time from 3500 ms to 4500 ms is the vote counting time. In other words, when the built-in clock of the campaign node reaches 1000 ms, each campaign node enters the voting time, and sends vote information to other nodes, and receives, in the voting time with a duration of 1000 ms, vote information sent by other nodes. When the clock reaches 2000 ms, voting is stopped. Similarly, in the vote counting time (3500 ms to 4500 ms), the campaign node counts the amount of the received vote information. When the clock reaches 4500 ms, the campaign nodes stop counting votes, and determine a leader node according to the counted amount of the vote information. Such a manner ensures that different campaign nodes synchronously perform a different operation in a different configured time.

In the situation as shown in FIG. 3b, there is no time interval between the voting time and the vote counting time configured by the host. In other words, each campaign node directly switches from a voting state to a vote counting state when the clock reaches 2000 ms.

However, in the situation as shown in FIG 3b, it needs to take a period of time to send vote information between nodes. For example, it needs to take 10 ms for a node to send generated vote information to a campaign node, and in this case, the clock of the campaign node already reaches 2000 ms during transmission of the vote information, that is, the campaign node enters the vote counting state. If the campaign node still receives the vote information after entering the vote counting state, when the campaign node counts the amount of the vote information, the accuracy of the finally counted amount of vote information will be affected.

Therefore, in the embodiment of the present application, before the campaign node counts the amount of the received vote information in the vote counting time, the method further includes: stopping, by the campaign node, receiving the vote information when the vote counting time arrives.

In this way, in the time configuration as shown in FIG. 3b, when the clock of the campaign node reaches 2000 ms and enters the vote counting state, the campaign node stops receiving vote information sent by other nodes. Therefore, this manner ensures the accuracy of the counted amount of vote information.

In addition, in the embodiment of the present application, considering that each campaign node independently counts the respective amount of vote information when the campaign nodes count the amount of the received vote information to determine a leader node, in order to ensure that the campaign node can directly determine whether the campaign node itself becomes a leader node according to the counted amount of the vote information, a threshold may be preset, and it is determined, according to the threshold and the counted amount of the vote information, whether the campaign node can become a leader node.

Therefore, in the embodiment of the present application, in step S204, the determining, by the campaign nodes, a leader node according to the counted respective amount of vote information specifically includes: determining, by the campaign node, the campaign node itself as a leader node when the campaign node judges that the counted amount of the vote information exceeds a preset threshold. The threshold is 1/2 of the number of all the nodes.

It should be noted here that, each node in the distributed system already knows the total number of all the nodes in the distributed system (in an implementation of the present application, the host may send the total number of nodes in the distributed system to each node). Therefore, when the amount of vote information of a node exceeds 1/2 of data volume of all the nodes, the node can be uniquely determined as the leader node.

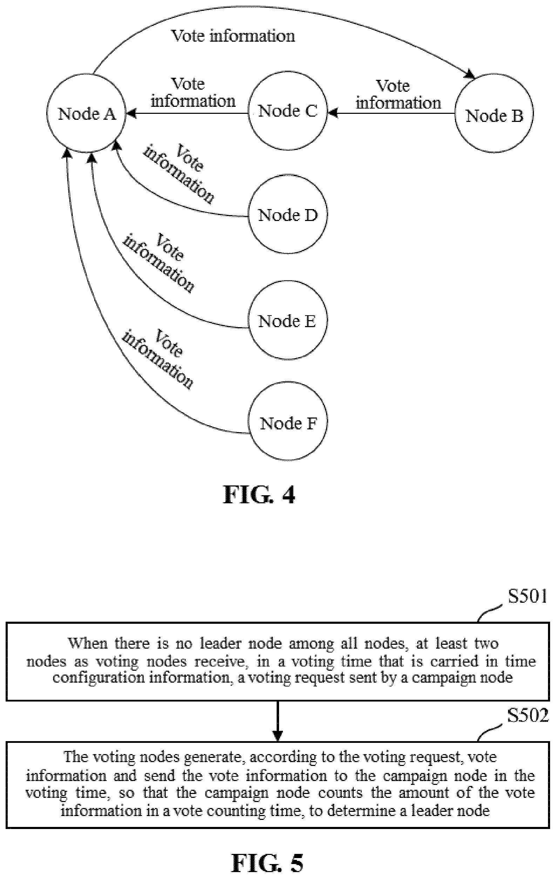

For example: as shown in FIG. 4, the distributed system includes 6 nodes, i.e., nodes A to F.

In the voting time, all the 6 nodes in the distributed system serve as a campaign node, send a voting request to other nodes (the voting request sending process is not shown in FIG. 4) and receive vote information. It is assumed that in this example, each node can successfully receive a voting request, and each node does not send a voting request to itself.

In this case, for the 6 nodes, each node may send voting requests to other nodes except itself (during an actual application, the node may also send a voting request to itself, and in this example, for ease of description, it is assumed that each node only sends voting requests to other nodes except itself). Specifically, the node A sends voting requests to other 5 nodes (the node B to the node F). Similarly, each of the node B to the node G also sends voting requests to other 5 nodes except itself. In this way, each node receiving the voting request generates vote information and sends the vote information to the corresponding campaign node.

Therefore, in this example, each node can determine that the number of nodes participating in voting is 6, and the threshold is set to 3.

It is assumed that, as shown in FIG. 4, the node A sends the generated vote information to the node B. The node B sends the generated vote information to the node C. The node C, the node D, the node E, and the node F all send the respectively generated vote information to the node A.

In the vote counting time, each node counts the amount of vote information received by itself. Specifically, the node A obtains through counting that the amount of the received vote information is 4, the node B obtains through counting that the amount of the received vote information is 1, the node C obtains through counting that the amount of the received vote information is 1, and the amount of vote information in the remaining nodes is 0.

The amount of the vote information in the node A is greater than the preset threshold; therefore, the node A may determine itself as a leader node. Subsequently, the node A sends a broadcast to other nodes, to notify other nodes that the node A has become a leader node.

However, in an actual application, as each node votes "autonomously" during node election, it is possible that the amount of vote information received by each of the campaign nodes does not exceed the preset threshold. Still taking the example above: it is assumed that the vote information generated by the node F is not sent to the node A but is sent to the C; in this case, the amount of the vote information in the node A is 3, the amount of the vote information in the node B is 1, and the amount of the vote information in the node C is 2. Apparently, the amount of vote information in each of the three nodes does not exceed the preset threshold (i.e., 3). Therefore, none of the nodes determines itself as a leader node. In other words, none of the nodes receives a notification message of a leader node within a specified period of time. This indicates that no leader node is elected in the current node election.

In the embodiment of the present application, once a leader node is not elected, the nodes may perform the node election again, till a leader node is determined.

With reference to the foregoing example, as a preferred manner of the embodiment of the present application, the voting time and the vote counting time configured by the host for the nodes are periodic, and the vote counting time may be more specifically divided into different sub-times. As shown in FIG. 3c, for the voting time and the vote counting time in one cycle, the vote counting time is specifically divided into a counting time and a notification time. Then, each node counts, in the counting time, the amount of the vote information received; and if no notification from a leader node is received in the notification time, the nodes may perform the next node election.

As shown in FIG. 3d, in the embodiment of the present application, multiple election times (each election time includes a voting time and a vote counting time) allocated by the host are periodic. In the first election time, if the nodes do not determine a leader node, node election will be performed again in the second election time, till a leader node is elected. Certainly, after a leader node is elected, node election will be performed periodically according to the leader node tenure in the time configuration information, and the specific process will be described in detail below. Details are not described here.

S201 to S204 of the method as shown in FIG. 2 are a process in which a campaign node sends a voting request to other nodes and receives vote information to determine a leader node. Each node in the distributed system may also serve as a voting node to receive a voting request sent by a campaign node, and generate corresponding vote information according to the voting request (even a campaign node may also receive voting requests sent by other campaign nodes, and in this case, the campaign node may also be regarded as a voting node). Therefore, with respect to a node that generates vote information, an embodiment of the present application further provides a time-based node election method. As shown in FIG. 5, the method is used for determining a leader node in a distributed system, and the method specifically includes the following steps:
S501. When there is no leader node among all nodes, at least two nodes as voting nodes receive, in a voting time that is carried in time configuration information, a voting request sent by a campaign node.

In the embodiment of the present application, when a leader node is not determined, each node in the distributed system may serve as a voting node, to receive a voting request sent by a campaign node.

Similarly, the voting node may also receive time configuration information sent by a host, adjust a clock in the voting node, and configure a voting time and a vote counting time.

S502. The voting nodes generate, according to the voting request, vote information and send the vote information to the campaign node in the voting time, so that the campaign node counts the amount of the vote information in a vote counting time, to determine a leader node.

In the distributed system, the voting node may receive a voting request sent by at least one campaign node (in an actual application scenario, the voting node usually receives voting requests sent by multiple campaign nodes). As only one leader node is finally elected, the voting node votes for one campaign node, that is, the voting node selects one campaign node according to the received voting requests, generates vote information for the selected node, and sends the vote information to the selected node.

Through the foregoing steps, as each voting node in the distributed system is configured with the same voting time, each voting node can select a campaign node in the same voting time, generate a corresponding voting request and send the voting request to the selected campaign node. Therefore, the synchronism of the voting process is ensured, and the node election efficiency is also improved.

It should be noted that, when a campaign node sends a voting request to the voting node, the voting request usually carries node information of the campaign node. In this way, if the voting node receives multiple voting requests, the voting node can select a campaign node according to node information carried in the voting requests.

Therefore, in the embodiment of the present application, the generating vote information and sending the vote information to the campaign node specifically includes: determining, by the voting node, node information carried in the received voting request; determining a node state weight of the campaign node according to the node information; and selecting a campaign node with a maximum node state weight, generating vote information for the campaign node, and sending the vote information to the selected campaign node.

The node information includes, but is not limited to, information that can reflect a data processing capacity and a processing state of the campaign node, such as data updating information, load processing information, and hardware configuration information of the campaign node. Therefore, the voting node can determine node state weights of different campaign nodes according to the node information, to reflect comprehensive state levels of different campaign nodes. Hence, in the embodiment of the present application, the voting node may select a campaign node with a maximum node state weight, generate corresponding vote information, and send the vote information to the campaign node, thus completing the voting process.

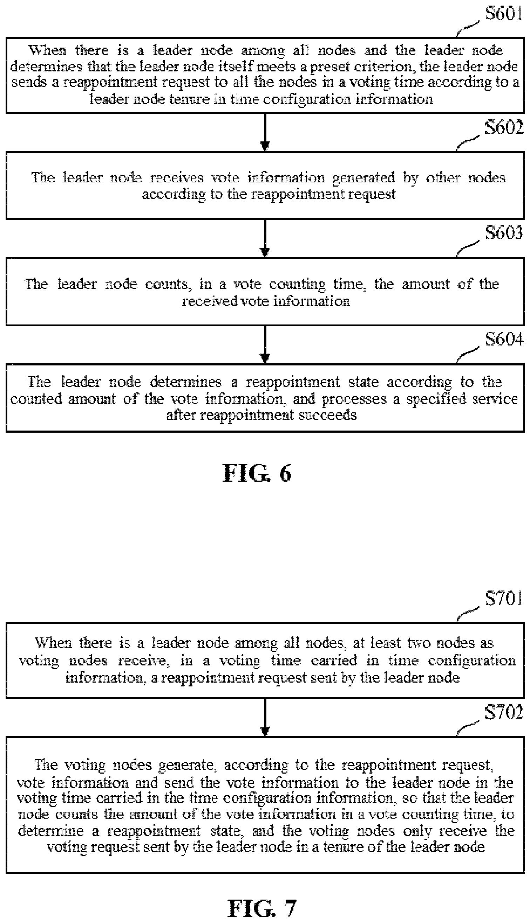

S201 to S204 of the method as shown in FIG. 2, and S501 to S502 of the method as shown in FIG. 5 are both a process in which the nodes determine a leader node according to the voting time and the vote counting time configured by the host when there is no leader node in the distributed system. If a leader node already exists in a distributed system, an embodiment of the present application further provides a time-based node election method. As shown in FIG. 6, the method is used for determining a leader node in a distributed system, and specifically includes the following steps:
S601. When there is a leader node among all nodes and the leader node determines that the leader node itself meets a preset criterion, the leader node sends a reappointment request to all the nodes in a voting time according to a leader node tenure in time configuration information.

In the embodiment of the present application, after a leader node is determined through S201 to S204 of the method as shown in FIG. 2 and S501 to S502 of the method as shown in FIG. 5, the next node election needs to be performed when the tenure of the leader is about to end. In this case, nodes other than the leader node do not send a voting request, but only the leader node may send a reappointment request to other nodes.

It should be noted that, as the distributed system processes a large volume of information during an actual application, there may be a lag in update of data (such as metadata) maintained by the leader node, or a situation where the processing load of the leader node increases continuously, resulting in a decrease in service processing efficiency thereof, and so on. Therefore, in the embodiment of the present application, when the next voting time arrives, the current leader node may judge whether the node state thereof meets the preset criterion, and if yes, it indicates that the processing load and the data updating degree of the leader node do not affect the efficiency of processing a specified service, and only in this case does the leader node send a reappointment request to other nodes.

The preset criterion includes, but is not limited to, a load processing criterion, a data updating degree, and the like. As different nodes may have different hardware configurations (processing performance, storage space, and so on), in the embodiment of the present application, preset criteria of the nodes may also be different. In this case, each node may generate a corresponding preset criterion according to its own hardware configuration.

Usually, the preset criterion of each node may be preset in the form of a standard value. For example, for a node, a load processing criterion may be that a usage rate of a Central Processing Unit (CPU) does not exceed 80%. In other words, when the usage of the CPU does not exceed 80%, it may be considered that the node meets the preset criterion.

For another example: for a node, a data updating degree criterion may be that a data updating frequency is over 10 min per update (the data updating frequency can reflect the data updating degree). In other words, when the data updating frequency of the node is over 10 min per update, it can be considered that the node meets the preset criterion.

Certainly, the above content is merely an example of the preset criterion provided in the embodiment of the present application, and in an actual application scenario, the preset criterion of each node may be set according to the need of the actual application. The content here does not limit the present application.

S602. The leader node receives vote information generated by other nodes according to the reappointment request.

A node that receives the reappointment request may generate corresponding vote information according to the reappointment request, and send the vote information to the leader node.

S603. The leader node counts, in a vote counting time, the amount of the received vote information.

S604. The leader node determines a reappointment state according to the counted amount of the vote information, and processes a specified service after reappointment succeeds.

In the embodiment of the present application, when the leader node sends the reappointment request to other nodes, there is no other campaign nodes in the distributed system, that is, each node only receives the reappointment request from the leader node. Therefore, the leader node is usually reappointed successfully.

After the leader node is successfully reappointed, the leader node may send a notification message to each node, to notify each node that the leader node has been reappointed successfully. Therefore, the successfully reappointed leader node continues to process the specified service, and other nodes in the distributed system continue to process services normally.

In the case of S601 to S604 of the method as shown in FIG. 6, an embodiment of the present application further provides a time-based node election method. As shown in FIG. 7, the method is used for determining a leader node in a distributed system, and specifically includes the following steps:
S701. When there is a leader node among all nodes, at least two nodes as voting nodes receive, in a voting time carried in time configuration information, a reappointment request sent by the leader node.

S702. The voting nodes generate, according to the reappointment request, vote information and send the vote information to the leader node in the voting time carried in the time configuration information, so that the leader node counts the amount of the vote information in a vote counting time, to determine a reappointment state; moreover, in a tenure of the leader node, the voting nodes only receive the voting request sent by the leader node.

Through S601 to S604 of the method as shown in FIG. 6 and S701 to S702 of the method as shown in FIG. 7, if a leader node already exists in the distributed system, when the next voting time arrives, all the nodes in the distributed system may synchronously enter a voting state, and only the leader node sends a reappointment request to other nodes; the nodes that receive the reappointment request may send the generated voting requests to the leader node. In this way, other nodes do not send voting requests to each other to determine a new leader node, thus effectively reducing processing load of each node and also improving the leader node election efficiency. Moreover, in the tenure of the leader node, no voting node will receive voting requests sent by other nodes. In this way, it can be ensured that each voting node only receives the voting request sent by the leader node.

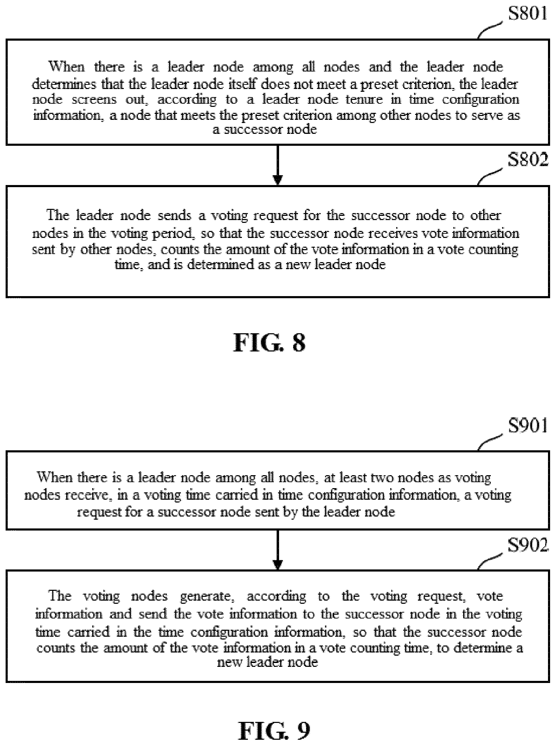

Certainly, during an actual application, each node in the distributed system processes a large quantity of services. The processing load of the leader node may increase, the data updating of the leader node may lag behind, and so on, making the leader node not meet the preset criterion. In this case, an embodiment of the present application provides a time-based node election method. As shown in FIG. 8, the method is used for determining a leader node in a distributed system, and specifically includes the following steps:
S801. When there is a leader node among all nodes and the leader node determines that the leader node itself does not meet a preset criterion, the leader node screens out, according to a leader node tenure in time configuration information, a node that meets the preset criterion among other nodes to serve as a successor node.

When the leader node determines that the leader node itself does not meet the preset criterion, it indicates that the leader node may have excessively high processing load or an excessively low data updating degree. In this case, the efficiency of the leader node for processing a specified service will be severely affected. That is, the current leader node is no longer suitable for processing the specified service.

Therefore, in the embodiment of the present application, before the tenure of the leader node ends, the leader node may screen out a successor node from other nodes. As a manner in the embodiment of the present application, the leader node may send a query request to other nodes, to query node information of other nodes, and select a successor node according to the node information. As another manner in the embodiment of the present application, the host may also specify the leader node to select a successor node, that is, a new leader node is selected. Then, after receiving a re-selection instruction, the current leader node may select, from other nodes, a node as a successor node of the leader node. Certainly, the above manners do not limit the present application.

S802. The leader node sends a voting request for the successor node to other nodes in the voting period, so that the successor node receives vote information sent by other nodes, counts the amount of the vote information in a vote counting time, and is determined as a new leader node.

In the voting time, the voting request sent by the leader node to other nodes carries a node identifier of the successor node, that is, a node receiving the voting request may generate corresponding vote information, and send the vote information to the successor node according to the node identifier of the successor node. In this way, the vote information of each node is sent to the successor node only, but is not sent to the current leader node.

Apparently, only the successor node receives the vote information sent by each node. Therefore, in the vote counting time, the successor node counts the amount of received vote information, and is determined as a leader node. The successor node also sends a notification message to each node, to notify each node that the successor node has become a new leader node.

In the case of S801 to S802 of the method as shown in FIG. 8, an embodiment of the present application further provides a time-based node election method. As shown in FIG. 9, the method is used for determining a leader node in a distributed system, and specifically includes the following steps:
S901. When there is a leader node among all nodes, at least two nodes as voting nodes receive, in a voting time carried in time configuration information, a voting request for a successor node sent by the leader node.

S902. The voting nodes generate, according to the voting request, vote information and send the vote information to the successor node in the voting time carried in the time configuration information, so that the successor node counts the amount of the vote information in a vote counting time, to determine a new leader node.

Similarly, in steps S901 to S902, the voting request sent by the leader node carries a node identifier of the successor node. Therefore, the voting nodes may generate corresponding vote information according to the voting request, and send the vote information to the successor node according to the node identifier of the successor node, but do not send the vote information to other nodes. This ensures that the successor node can become a new leader node smoothly.

Through the above methods and examples, when no leader node exists in the distributed system, the host of the distributed system configures the same voting time and the same vote counting time for the nodes, so that the nodes synchronously vote in the voting time, and synchronously count votes in the vote counting time. In this way, uncertain timing of each node for voting or vote counting is avoided, thus greatly improving the efficiency of electing a leader node by the nodes in the distributed system.

Moreover, after a leader node is elected, each node still performs operations according to the periodic voting time and vote counting time. When the next voting time and vote counting time arrive, the leader node may judge its own state, to generate a voting request for the leader node itself or a voting request for a successor node, so that other nodes generate, according to the voting request, vote information and send the vote information to the corresponding node. Such a manner ensures that the elected leader node for processing a specified service is always in a high-performance state, so that the service processing efficiency of the whole distributed system can be improved.

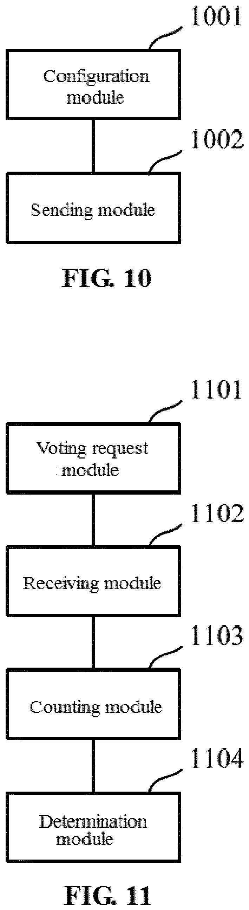

The above are the time-based node election methods provided in the embodiments of the present application. Based on the same thinking, the embodiments of the present application further provide a time-based node election apparatus, as shown in FIG. 10.

In FIG. 10, the time-based node election apparatus includes: a configuration module 1001 and a sending module 1002, wherein
the configuration module 1001 is configured to configure a same voting time, a same vote counting time, and a same leader node tenure for all nodes; and
the sending module 1002 is configured to send time configuration information that carries the configured voting time, vote counting time, and leader node tenure to all the nodes, so that the nodes vote in the voting time, count the number of votes in the vote counting time, and elect a leader node according to a vote counting result, and the nodes are enabled to perform periodic node election according to the leader node tenure.

In the case as shown in FIG. 10, an embodiment of the present application further provides a time-based node election apparatus. As shown in FIG. 11, the apparatus is configured to determine a leader node in a distributed system, and is disposed in a campaign node.

In FIG. 11, the time-based node election apparatus includes: a voting request module 1101, a receiving module 1102, a counting module 1103, and a determination module 1104, wherein when there is no leader node among all nodes,
the voting request module 1101 is configured to send a voting request to all the nodes in a voting time that is carried in time configuration information;
the receiving module 1102 is configured to receive vote information that is generated by other nodes according to the voting request;
the counting module 1103 is configured to count, in a vote counting time that is carried in the time configuration information, the amount of vote information received; and
the determination module 1104 is configured to determine a leader node according to the counted respective amount of vote information, to process a specified service.

In the embodiment of the present application, the receiving module 1102 is further configured to stop receiving the vote information when the vote counting time arrives.

The determination module 1104 is specifically configured to determine the campaign node as a leader node when judging that the counted amount of the vote information exceeds a preset threshold.

The threshold is 1/2 of the number of all the nodes.

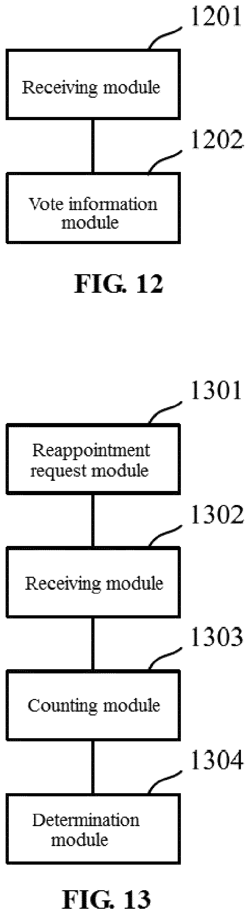

An embodiment of the present application further provides a time-based node election apparatus. As shown in FIG. 12, the apparatus is configured to determine a leader node in a distributed system, and is disposed in a voting node.

In FIG. 12, the time-based node election apparatus includes: a receiving module 1201 and a vote information module 1202, wherein when there is no leader node among all nodes,
the receiving module 1201 is configured to receive, in a voting time that is carried in time configuration information, a voting request sent by a campaign node; and
the vote information module 1202 is configured to generate, according to the voting request, vote information and send the vote information to the campaign node in the voting time, so that the campaign node counts the amount of the vote information in a vote counting time, to determine a leader node.

In the embodiment of the present application, the vote information module 1202 is specifically configured to determine node information carried in the received voting request, determine a node state weight of the campaign node according to the node information, select a campaign node with a maximum node state weight, generate vote information for the campaign node, and send the vote information to the selected campaign node.

An embodiment of the present application further provides a time-based node election apparatus. As shown in FIG. 13, the apparatus is configured to determine a leader node in a distributed system, and is disposed in a leader node.

In FIG. 13, the time-based node election apparatus includes: a reappointment request module 1301, a receiving module 1302, a counting module 1303, and a determination module 1304, wherein when there is a leader node among all nodes and the leader node determines that the leader node itself meets a preset criterion,
the reappointment request module 1301 is configured to send a reappointment request to all the nodes in a voting time according to a leader node tenure in time configuration information;
the receiving module 1302 is configured to receive vote information generated by other nodes according to the reappointment request;
the counting module 1303 is configured to count, in a vote counting time, the amount of the received vote information; and
the determination module 1304 is configured to determine a reappointment state according to the counted amount of the vote information, and process a specified service after reappointment succeeds.

The preset criterion comprises at least one of a load processing criterion and a data updating degree.

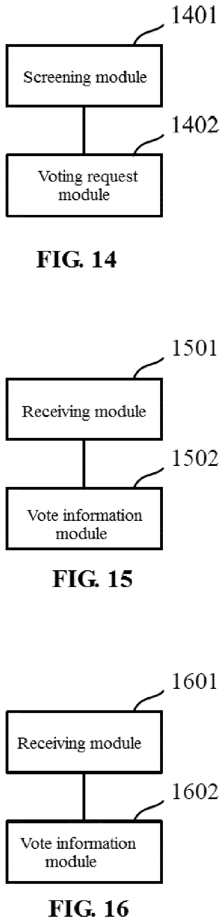

An embodiment of the present application further provides a time-based node election apparatus. As shown in FIG. 14, the apparatus is configured to determine a leader node in a distributed system, and is disposed in a leader node.

In FIG. 14, the time-based node election apparatus includes: a screening module 1401 and a voting request module 1402, wherein when there is a leader node among all nodes and the leader node determines that the leader node itself does not meet a preset criterion,
the screening module 1401 is configured to screen out, according to a leader node tenure in time configuration information, a node that meets the preset criterion among other nodes to serve as a successor node; and
the voting request module 1402 is configured to send a voting request for the successor node to other nodes in the voting period, so that the successor node receives vote information sent by other nodes, counts the amount of the vote information in a vote counting time, and is determined as a new leader node.

An embodiment of the present application further provides a time-based node election apparatus. As shown in FIG. 15, the apparatus is configured to determine a leader node in a distributed system, and is disposed in a voting node.

In FIG. 15, the time-based node election apparatus includes: a receiving module 1501 and a vote information module 1502, wherein when there is a leader node among all nodes,
the receiving module 1501 is configured to receive, in a voting time carried in time configuration information, a reappointment request sent by the leader node; and
the vote information module 1502 is configured to generate, according to the reappointment request, vote information and send the vote information to the leader node in the voting time carried in the time configuration information, so that the leader node counts the amount of the vote information in a vote counting time, to determine a reappointment state; and configured to only receive the voting request sent by the leader node in a tenure of the leader node.

An embodiment of the present application further provides a time-based node election apparatus. As shown in FIG. 16, the apparatus is configured to determine a leader node in a distributed system, and is disposed in a voting node.

In FIG. 16, the time-based node election apparatus includes: a receiving module 1601 and a vote information module 1602, wherein when there is a leader node among all nodes,
the receiving module 1601 is configured to receive, in a voting time carried in time configuration information, a voting request for a successor node sent by the leader node; and
the vote information module 1602 is configured to generate, according to the voting request, vote information and send the vote information to the successor node in the voting time carried in the time configuration information, so that the successor node counts the amount of the vote information in a vote counting time, to determine a new leader node.

In a typical configuration, a computing device includes one or more processors (CPUs), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission media, and can be used to store information accessible to the computing device. According to the definition herein, the computer readable medium does not include transitory media, such as modulated data signals and carriers.

It should be further noted that, the terms "include", "comprise" or any other variations thereof are intended to cover non-exclusive inclusion, so that a process, method, commodity or device including a series of elements not only includes the elements, but also includes other elements not clearly listed, or further includes inherent elements of the process, method, commodity or device. In the absence of more limitations, an element defined by "including a/an..." does not exclude that the process, method, commodity or device including the element further has other identical elements.

Those skilled in the art should understand that, the embodiments of the present application may be provided as a method, a system, or a computer program product. Therefore, the embodiment of the present application may be implemented as a complete hardware embodiment, a complete software embodiment, or an embodiment combining software and hardware. Moreover, the present application may be in the form of a computer program product implemented on one or more computer usable storage media (including, but not limited to, a magnetic disk memory, a CD-ROM, an optical memory, and the like) including computer usable program code.

The above are merely embodiments of the present application, which are not intended to limit the present application. For those skilled in the art, various changes and modifications may be made to the present application.

## Claims

1. A time-based node election method for determining a leader node in a distributed system, the method comprising:
configuring (101), by a host, a same voting time, a same vote counting time, and a same leader node tenure for all nodes, wherein the voting time and the vote counting time are each time intervals that do not overlap, wherein an election time for electing a node to serve as a leader node includes the voting time and the vote counting time, wherein the voting time, the vote counting time, and the leader node tenure are periodic, wherein the host is disposed in the distributed system to manage nodes, and wherein the elected leader node is for maintaining and managing descriptive information for data resources in different nodes;
sending (102), by the host, time configuration information that conveys the configured voting time, vote counting time, and leader node tenure to all the nodes, so that the nodes vote in the voting time, count a number of votes in the vote counting time, and elect a leader node according to a vote counting result, and the nodes are enabled to perform periodic node election according to the leader node tenure, wherein after each node separately receives the time configuration information, each node adjusts a built-in clock according to the received time configuration information so that different nodes synchronously trigger the voting time and the vote counting time and perform corresponding operations synchronously;
when there is no leader node among all nodes, sending (201), by at least two nodes serving as campaign nodes, a voting request to all the nodes in a voting time that is conveyed in the time configuration information;
when there is no leader node among all nodes, receiving (501), by at least two nodes serving as voting nodes in the voting time that is conveyed in the time configuration information, the voting request sent by the at least two campaign nodes, wherein each voting request conveys respective node information of each campaign node sending the voting request, wherein the node information includes information reflecting a data processing capacity and a processing state of the campaign node;
generating (502), by each of the voting nodes, according to the voting requests received by the voting nodes, vote information for the campaign node;
sending (502), by each of the voting nodes, the vote information to a selected campaign node by the voting node, in the voting time, so that the selected campaign node counts an amount of the vote information in the vote counting time, to determine a leader node, wherein generating the vote information and sending the vote information to the campaign node comprise
determining, by each of the voting nodes, a node state weight of each of the campaign nodes according to the node information conveyed in the voting requests received by each of the voting nodes, wherein the node state weights reflect comprehensive state levels of campaign nodes, and
selecting, by each of the voting nodes, a campaign node with a maximum node state weight for sending the vote information;
receiving (202), by each campaign node, vote information that is generated by other nodes according to the voting request sent by each campaign node, wherein each other node sends vote information to only one of the campaign nodes, thereby voting for that campaign node;
counting (203), by each campaign node in the vote counting time that is conveyed in the time configuration information, the amount of vote information received; and
determining (204), by the campaign nodes, a leader node according to the counted respective amount of vote information, to process a specified service, comprising determining, by one of the campaign nodes, that the campaign node itself is the leader node when the campaign node judges that the counted amount of the vote information exceeds a preset threshold that is 1/2 of the number of all the nodes and sending by the determined leader node a notification message to other nodes to inform other nodes that the leader node has been produced.

2. The method of claim 1, wherein before the campaign node counts, in the vote counting time, the amount of the vote information received, the method further comprises:
stopping, by the campaign node, receiving the vote information when the vote counting time arrives.

3. The method of any one of claims 1 to 2, further comprising:
when there is a leader node among all nodes and the leader node determines that the leader node itself meets a preset criterion, sending (601), by the leader node, a reappointment request to all the nodes in a voting time according to a leader node tenure in time configuration information;
receiving (602), by the leader node, vote information generated by other nodes according to the reappointment request;
counting (603), by the leader node in a vote counting time, the amount of the received vote information; and
determining (604), by the leader node, a reappointment state according to the counted amount of the vote information, and processing a specified service after reappointment succeeds;
wherein the preset criterion comprises at least one of a load processing criterion and a data updating degree.

4. The method of any one of claims 1 or 2, further comprising:
when there is a leader node among all nodes and the leader node determines that the leader node itself does not meet a preset criterion, screening out, by the leader node according to a leader node tenure in time configuration information, a node that meets the preset criterion among other nodes to serve as a successor node; and
sending, by the leader node, a voting request for the successor node to other nodes in the voting period, so that the successor node receives vote information sent by other nodes, counts the amount of the vote information in a vote counting time, and is determined as a new leader node.

5. The method of claim 1, further comprising:
when there is a leader node among all nodes, receiving (701), by at least two nodes as voting nodes in a voting time conveyed in time configuration information, a reappointment request sent by the leader node; and
generating (702), by the voting nodes according to the reappointment request, vote information and sending the vote information to the leader node in the voting time conveyed in the time configuration information, so that the leader node counts the amount of the vote information in a vote counting time, to determine a reappointment state;
wherein the voting nodes only receive the voting request of the leader node in a tenure of the leader node.

6. The method of claim 1, further comprising:
when there is a leader node among all nodes, receiving (901), by at least two nodes as voting nodes in a voting time conveyed in time configuration information, a voting request for a successor node sent by the leader node; and
generating (902), by the voting nodes according to the voting request, vote information and sending the vote information to the successor node in the voting time conveyed in the time configuration information, so that the successor node counts the amount of the vote information in a vote counting time, to determine a new leader node.

7. A time-based node election apparatus, wherein the apparatus is configured to determine a leader node in a distributed system, the apparatus comprising multiple modules (1001, 1002, 1101-1104, 1201, 1202, 1301-1304, 1401, 1402, 1501, 1502, 1601, 1602) configured to perform the method of any one of claims 1 to 6.

## Patentansprüche

1. Zeitbasiertes Knotenwahlverfahren zum Bestimmen eines Führungsknotens in einem verteilten System, wobei das Verfahren Folgendes umfasst:
Konfigurieren (101) durch einen Host derselben Abstimmungszeit, derselben Stimmauszählungszeit und derselben Führungsknotenamtszeit für alle Knoten, wobei die Abstimmungszeit und die Stimmauszählungszeit jeweils Zeitintervalle sind, die sich nicht überschneiden, wobei eine Wahlzeit zum Wählen eines Knotens, um als ein Führungsknoten zu dienen, die Abstimmungszeit und die Stimmauszählungszeit enthält, wobei die Abstimmungszeit, die Stimmauszählungszeit und die Führungsknotenamtszeit periodisch sind, wobei der Host in dem verteilten System ausgelegt ist, Knoten zu managen, und wobei der gewählte Führungsknoten zum Führen und Managen beschreibender Informationen für Datenbetriebsmittel in verschiedenen Knoten dient;
Senden (102) durch den Host von Zeitkonfigurationsinformationen, die die konfigurierte Abstimmungszeit, die Stimmauszählungszeit und eine Führungsknotenamtszeit übermitteln, an alle Knoten, so dass die Knoten in der Abstimmungszeit abstimmen, eine Anzahl von Stimmen in der Stimmauszählungszeit zählen und einen Führungsknoten gemäß einem Stimmauszählungsergebnis wählen und die Knoten eine periodische Knotenwahl gemäß der Führungsknotenamtszeit ausführen können, wobei, nachdem jeder Knoten die Zeitkonfigurationsinformationen getrennt empfängt, jeder Knoten eine eingebaute Uhr gemäß den empfangenen Zeitkonfigurationsinformationen anpasst, so dass verschiedene Knoten synchron die Abstimmungszeit und die Stimmauszählungszeit auslösen und entsprechende Vorgänge synchron ausführen;
dann, wenn es keinen Führungsknoten unter allen Knoten gibt, Senden (201) durch mindestens zwei Knoten, die als Kampagnenknoten dienen, einer Abstimmungsanforderung an alle Knoten in einer Abstimmungszeit, die in den Zeitkonfigurationsinformationen übermittelt wird;
dann, wenn es keinen Führungsknoten unter allen Knoten gibt, Empfangen (501) durch mindestens zwei Knoten, die in der Abstimmungszeit, die in den Zeitkonfigurationsinformationen übermittelt wird, als Abstimmungsknoten dienen, der Abstimmungsanforderung, die durch die mindestens zwei Kampagnenknoten gesendet wird, wobei jede Abstimmungsanforderung jeweilige Knoteninformationen jedes Kampagnenknotens, der die Abstimmungsanforderung sendet, übermittelt, wobei die Knoteninformationen Informationen enthalten, die eine Datenverarbeitungskapazität und einen Verarbeitungszustand des Kampagnenknotens reflektieren;
Erzeugen (502) durch jeden der Abstimmungsknoten gemäß den Abstimmungsanforderungen, die durch die Abstimmungsknoten empfangen werden, von Abstimmungsinformationen für den Kampagnenknoten;
Senden (502) durch jeden der Abstimmungsknoten der Abstimmungsinformationen an einen ausgewählten Kampagnenknoten durch den Abstimmungsknoten in der Abstimmungszeit, so dass der ausgewählte Kampagnenknoten eine Menge der Abstimmungsinformationen in der Stimmauszählungszeit zählt, um einen Führungsknoten zu bestimmen, wobei das Erzeugen der Abstimmungsinformationen und das Senden der Abstimmungsinformationen an den Kampagnenknoten Folgendes umfasst:
Bestimmen durch jeden der Abstimmungsknoten einer Knotenzustandsgewichtung jedes der Kampagnenknoten gemäß den Knoteninformationen, die in den Abstimmungsanforderungen übermittelt werden, die durch jeden der Abstimmungsknoten empfangen werden, wobei die Knotenzustandsgewichtungen umfassende Zustandsniveaus von Kampagnenknoten reflektieren, und
Auswählen durch jeden der Abstimmungsknoten eines Kampagnenknotens mit einer maximalen Knotenzustandsgewichtung zum Senden der Abstimmungsinformationen;
Empfangen (202) durch jeden Kampagnenknoten von Abstimmungsinformationen, die durch andere Knoten gemäß der Abstimmungsanforderung erzeugt werden, die durch jeden Kampagnenknoten gesendet wird, wobei jeder andere Knoten Abstimmungsinformationen an nur einen der Kampagnenknoten sendet, wodurch er für diesen Kampagnenknoten stimmt;
Zählen (203) durch jeden Kampagnenknoten in der Stimmauszählungszeit, die in den Zeitkonfigurationsinformationen übermittelt wird, der Menge von empfangenen Abstimmungsinformationen; und
Bestimmen (204) durch die Kampagnenknoten eines Führungsknotens gemäß der gezählten jeweiligen Menge von Abstimmungsinformationen, um einen spezifizierten Dienst zu verarbeiten, das umfasst, durch einen der Kampagnenknoten zu bestimmen, dass der Kampagnenknoten selbst der Führungsknoten ist, wenn der Kampagnenknoten beurteilt, dass die gezählte Menge der Abstimmungsinformationen einen voreingestellten Schwellenwert übersteigt, der 1/2 der Anzahl aller Knoten ist, und Senden durch den bestimmten Führungsknoten einer Benachrichtigungsnachricht an andere Knoten, um die anderen Knoten darüber zu informieren, dass der Führungsknoten erzeugt wurde.

2. Verfahren nach Anspruch 1, wobei, bevor der Kampagnenknoten in der Stimmauszählungszeit die Menge der empfangenen Abstimmungsinformationen zählt, das Verfahren ferner Folgendes umfasst:
Stoppen, durch den Kampagnenknoten, die Abstimmungsinformationen zu empfangen, wenn die Stimmauszählungszeit eintritt.

3. Verfahren nach einem der Ansprüche 1 bis 2, das ferner Folgendes umfasst:
dann, wenn es einen Führungsknoten unter allen Knoten gibt und der Führungsknoten bestimmt, dass der Führungsknoten selbst ein voreingestelltes Kriterium erfüllt, Senden (601) durch den Führungsknoten einer Wiedereinsetzungsanforderung an alle Knoten in einer Abstimmungszeit gemäß einer Führungsknotenamtszeit in Zeitkonfigurationsinformationen;
Empfangen (602) durch den Führungsknoten von Abstimmungsinformationen, die durch andere Knoten gemäß der Wiedereinsetzungsanforderung erzeugt werden;
Zählen (603) durch den Führungsknoten in einer Stimmauszählungszeit der Menge der empfangenen Abstimmungsinformationen; und
Bestimmen (604) durch den Führungsknoten eines Wiedereinsetzungszustands gemäß der gezählten Menge der Abstimmungsinformationen und Verarbeiten eines spezifizierten Dienstes, nachdem die Wiedereinsetzung erfolgreich ist;
wobei das voreingestellte Kriterium ein Ladungsverarbeitungskriterium und/oder einen Datenaktualisierungsgrad umfasst.

4. Verfahren nach einem der Ansprüche 1 oder 2, das ferner Folgendes umfasst:
dann, wenn es einen Führungsknoten unter allen Knoten gibt und der Führungsknoten bestimmt, dass der Führungsknoten selbst ein voreingestelltes Kriterium nicht erfüllt, Aussondern durch den Führungsknoten gemäß einer Führungsknotenamtszeit in Zeitkonfigurationsinformationen eines Knotens, der das voreingestellte Kriterium erfüllt, unter anderen Knoten, um als ein Nachfolgerknoten zu dienen; und
Senden durch den Führungsknoten einer Abstimmungsanforderung für den Nachfolgerknoten an andere Knoten in der Abstimmungsperiode, so dass der Nachfolgerknoten Abstimmungsinformationen empfängt, die durch andere Knoten gesendet werden, die Menge der Abstimmungsinformationen in einer Stimmauszählungszeit zählt und als ein neuer Führungsknoten bestimmt wird.

5. Verfahren nach Anspruch 1, das ferner Folgendes umfasst:
dann, wenn es einen Führungsknoten unter allen Knoten gibt, Empfangen (701) durch mindestens zwei Knoten als Abstimmungsknoten in einer Abstimmungszeit, die in Zeitkonfigurationsinformation übermittelt wird, einer Wiedereinsetzungsanforderung, die durch den Führungsknoten gesendet wird; und
Erzeugen (702) durch die Abstimmungsknoten gemäß der Wiedereinsetzungsanforderung von Abstimmungsinformationen und Senden der Abstimmungsinformationen an den Führungsknoten in der Abstimmungszeit, die in den Zeitkonfigurationsinformationen übermittelt wird, so dass der Führungsknoten die Menge der Abstimmungsinformationen in einer Stimmauszählungszeit zählt, um einen Wiedereinsetzungszustand zu bestimmen;
wobei die Abstimmungsknoten nur die Abstimmungsanforderung des Führungsknotens in einer Amtszeit des Führungsknotens empfangen.

6. Verfahren nach Anspruch 1, das ferner Folgendes umfasst:
dann, wenn es einen Führungsknoten unter allen Knoten gibt, Empfangen (901) durch mindestens zwei Knoten als Abstimmungsknoten in einer Abstimmungszeit, die in Zeitkonfigurationsinformationen übermittelt wird, einer Abstimmungsanforderung für einen Nachfolgerknoten, die durch den Führungsknoten gesendet wird; und
Erzeugen (902) durch die Abstimmungsknoten gemäß der Abstimmungsanforderung von Abstimmungsinformationen und Senden der Abstimmungsinformationen an den Nachfolgerknoten in der Abstimmungszeit, die in den Zeitkonfigurationsinformationen übermittelt wird, so dass der Nachfolgerknoten die Menge der Abstimmungsinformationen in einer Stimmauszählungszeit zählt, um einen neuen Führungsknoten zu bestimmen.

7. Zeitbasierte Knotenwahlvorrichtung, wobei die Vorrichtung konfiguriert ist, einen Führungsknoten in einem verteilten System zu bestimmen, wobei die Vorrichtung mehrere Module (1001, 1002, 1101-1104, 1201, 1202, 1301-1304, 1401, 1402, 1501, 1502, 1601, 1602) umfasst, die konfiguriert sind, das Verfahren nach einem der Ansprüche 1 bis 6 auszuführen.

## Revendications

1. Procédé d'élection de nœud basée sur le temps permettant la détermination d'un nœud leader dans un système distribué, le procédé comprenant :
la configuration (101), par un hôte, d'un même temps de vote, d'un même temps de comptage de votes et d'un même mandat de nœud leader pour tous les nœuds, le temps de vote et le temps de comptage de votes étant chacun des intervalles de temps qui ne se chevauchent pas, un temps d'élection pour l'élection d'un nœud appelé à faire fonction de nœud leader comportant le temps de vote et le temps de comptage de votes, le temps de vote, le temps de comptage de votes et le mandat de nœud leader étant périodiques, l'hôte étant placé dans le système distribué pour gérer des nœuds et le nœud leader élu étant destiné à tenir à jour et à gérer des informations descriptives pour des ressources de données dans des nœuds différents ;
l'envoi (102), par l'hôte, d'informations de configuration de temps qui acheminent les temps de vote, temps de comptage de votes et mandat de nœud leader configurés jusqu'à tous les nœuds, de sorte que les nœuds votent dans le temps de vote, comptent un nombre de votes dans le temps de comptage de votes et élisent un nœud leader selon un résultat de comptage de votes et que les nœuds soient habilités à réaliser une élection de nœud périodique selon le mandat de nœud leader ; après que chaque nœud a reçu séparément les informations de configuration de temps, chaque nœud ajustant une horloge intégrée selon les informations de configuration de temps reçues de sorte que des nœuds différents déclenchent de façon synchrone le temps de vote et le temps de comptage de votes et réalisent des opérations correspondantes de façon synchrone ;
en l'absence d'un nœud leader parmi tous les nœuds, l'envoi (201), par au moins deux nœuds faisant fonction de nœuds en campagne, d'une demande de vote à tous les nœuds dans un temps de vote qui est acheminé dans les informations de configuration de temps ;
en l'absence d'un nœud leader parmi tous les nœuds, la réception (501), par au moins deux nœuds faisant fonction de nœuds votants dans le temps de vote qui est acheminé dans les informations de configuration de temps, de la demande de vote envoyée par les au moins deux nœuds en campagne, chaque demande de vote acheminant des informations de nœud respectives de chaque nœud en campagne qui envoie la demande de vote, les informations de nœud comportant des informations qui reflètent une capacité de traitement de données et un état de traitement du nœud en campagne ;
la génération (502), par chacun des nœuds votants, selon les demandes de vote reçues par les nœuds votants, d'informations de vote pour le nœud en campagne ;
l'envoi (502), par chacun des nœuds votants, des informations de vote à un nœud en campagne sélectionné par le nœud votant, dans le temps de vote, de sorte que le nœud en campagne sélectionné compte une quantité des informations de vote dans le temps de comptage de votes dans le but de déterminer un nœud leader, la génération des informations de vote et l'envoi des informations de vote au nœud en campagne comprenant
la détermination, par chacun des nœuds votants, d'un poids d'état de nœud de chacun des nœuds en campagne selon les informations de nœud acheminées dans les demandes de vote reçues par chacun des nœuds votants, les poids d'état de nœud reflétant des niveaux d'état globaux de nœuds en campagne, et
la sélection, par chacun des nœuds votants, d'un nœud en campagne ayant un poids d'état de nœud maximal pour l'envoi des informations de vote ;
la réception (202), par chaque nœud en campagne, d'informations de vote qui sont générées par d'autres nœuds selon la demande de vote envoyée par chaque nœud en campagne, chaque autre nœud envoyant des informations de vote uniquement à l'un des nœuds en campagne pour ainsi voter pour ce nœud en campagne ;
le comptage (203), par chaque nœud en campagne dans le temps de comptage de votes qui est acheminé dans les informations de configuration de temps, de la quantité d'informations de vote reçues ; et
la détermination (204), par les nœuds en campagne, d'un nœud leader selon la quantité respective comptée d'informations de vote, dans le but de traiter un service spécifié, comprenant la détermination, par l'un des nœuds en campagne, que le nœud en campagne lui-même est le nœud leader lorsque le nœud en campagne évalue que la quantité comptée des informations de vote dépasse un seuil prédéfini qui représente la moitié du nombre de tous les nœuds et l'envoi, par le nœud leader déterminé, d'un message de notification à d'autres nœuds pour informer d'autres nœuds que le nœud leader a été produit.

2. Procédé selon la revendication 1, lequel procédé comprend en outre, avant que le nœud en campagne compte, dans le temps de comptage de votes, la quantité des informations de vote reçues :
l'interruption, par le nœud en campagne, de la réception des informations de vote lorsque le temps de comptage de votes arrive.

3. Procédé selon l'une quelconque des revendications 1 à 2, comprenant en outre :
en l'absence d'un nœud leader parmi tous les nœuds et lorsque le nœud leader détermine que le nœud leader lui-même satisfait à un critère prédéfini, l'envoi (601), par le nœud leader, d'une demande de reconduction à tous les nœuds dans un temps de vote selon un mandat de nœud leader dans des informations de configuration de temps ;
la réception (602), par le nœud leader, d'informations de vote générées par d'autres nœuds selon la demande de reconduction ;
le comptage (603), par le nœud leader dans un temps de comptage de votes, de la quantité des informations de vote reçues ; et
la détermination (604), par le nœud leader, d'un état de reconduction selon la quantité comptée des informations de vote, et le traitement d'un service spécifié une fois la reconduction effectuée avec succès ;
le critère prédéfini comprenant un critère de traitement de charge et/ou un degré d'actualisation de données.

4. Procédé selon l'une quelconque des revendications 1 ou 2, comprenant en outre :
en présence d'un nœud leader parmi tous les nœuds et lorsque le nœud leader détermine que le nœud leader lui-même ne satisfait pas au critère prédéfini, la singularisation, par le nœud leader selon un mandat de nœud leader dans des informations de configuration de temps, d'un nœud qui satisfait au critère prédéfini parmi d'autres nœuds pour faire fonction de nœud successeur ; et
l'envoi, par le nœud leader, d'une demande de vote pour le nœud successeur à d'autres nœuds dans la période de vote, de sorte que le nœud successeur reçoive des informations de vote envoyées par d'autres nœuds, compte la quantité des informations de vote dans un temps de comptage de votes et soit déterminé comme nouveau nœud leader.

5. Procédé selon la revendication 1, comprenant en outre :
en présence d'un nœud leader parmi tous les nœuds, la réception (701), par au moins deux nœuds faisant office de nœuds votants dans un temps de vote acheminé dans des informations de configuration de temps, d'une demande de reconduction envoyée par le nœud leader ; et
la génération (702), par les nœuds votants selon la demande de reconduction, d'informations de vote et l'envoi des informations de vote au nœud leader dans le temps de vote acheminé dans les informations de configuration de temps, de sorte que le nœud leader compte la quantité des informations de vote dans un temps de comptage de votes dans le but de déterminer un état de reconduction ;
les nœuds votants recevant uniquement la demande de vote du nœud leader dans un mandat du nœud leader.

6. Procédé selon la revendication 1, comprenant en outre :
en présence d'un nœud leader parmi tous les nœuds, la réception (901), par au moins deux nœuds faisant office de nœuds votants dans un temps de vote acheminé dans des informations de configuration de temps, d'une demande de vote pour un nœud successeur envoyée par le nœud leader : et
la génération (902), par les nœuds votants selon la demande de vote, d'informations de vote et l'envoi des informations de vote au nœud successeur dans le temps de vote acheminé dans les informations de configuration de temps, de sorte que le nœud successeur compte la quantité des informations de vote dans un temps de comptage de votes afin de déterminer un nouveau nœud leader.

7. Appareil d'élection de nœud basée sur le temps, l'appareil étant configuré pour déterminer un nœud leader dans un système distribué, l'appareil comprenant de multiples modules (1001, 1002, 1101-1104, 1201, 1202, 1301-1304, 1401, 1402, 1501, 1502, 1601, 1602) configurés pour réaliser le procédé selon l'une quelconque des revendications 1 à 6.
